# FASCICULE DE BREVET EUROPEEN

(11) **EP 1 110 772 B1**
(45) Date de publication et mention de la délivrance du brevet: **23.05.2007**
(21) Numéro de dépôt: 00127122.0
(22) Date de dépôt: 12.12.2000
(51) Int. Cl.: B60H 1/32

(54) **Procédé pour contrôler la charge de fluide réfrigérant d'une boucle de climatisation de véhicule**
Verfahren für die Steuerung der Aufladung des Kühlmediums in einem Kühlsystem einer Kraftfahrzeugklimaanlage
Procedure for controlling the charging of refrigerant in an air conditioning system in a vehicle

(30) Priorité: 17.12.1999 FR 9916009
(43) Date de publication de la demande: 27.06.2001
(73) Titulaire: Valeo Systèmes Thermiques, 78321 Le Mesnil St Denis Cedex (FR)
(72) Inventeur: Liu, Jin Ming, 78700 Conflans S/Honorine (FR); Hamery, Bruno, 75005 Paris (FR)
(74) Mandataire: Gérard, Michel

(56) Documents cités:
- DE-A- 19 713 197
- US-A- 4 102 150
- US-A- 4 667 480
- US-A- 4 783 970
- US-A- 4 909 043

## Description

L'invention concerne la climatisation de l'habitacle des véhicules automobiles.

On fait appel communément pour cette fonction à une boucle de fluide réfrigérant comprenant un compresseur, un condenseur, un détendeur et un évaporateur, ce dernier étant en contact avec un flux d'air à refroidir. Le document US 4 909 043, qui est considéré comme l'état de l'art le plus proche, décrit une telle boucle de fluide réfrigérant.

Une telle boucle est conçue pour fonctionner correctement avec une quantité minimale de fluide réfrigérant. En-deçà de cette quantité minimale, l'évaporateur n'est plus suffisamment alimenté en fluide à l'état liquide, et présente une zone de surchauffe importante qui ne permet pas un refroidissement adéquat du flux d'air. Un manque de fluide réfrigérant peut également conduire à un endommagement du compresseur. Ceci peut se produire notamment en cas de fuite dans la boucle.

Par ailleurs, le document US5724941 divulgue un procédé pour contrôler le fonctionnement normal ou anormal d'une boucle de climatisation de l'habitacle d'un véhicule automobile, dans le cas où le moteur du véhicule est au ralenti, à partir d'un capteur de température placé en aval de l'évaporateur. Ce procédé ne permet cependant pas de détecter une charge insuffisante du fluide réfrigérant.

Le but de l'invention est de permettre la détection d'une charge insuffisante de fluide réfrigérant, sans faire appel à des capteurs prévus spécialement à cet effet.

L'invention vise en particulier un procédé pour contrôler la charge de fluide réfrigérant d'une boucle de climatisation de l'habitacle d'un véhicule automobile comprenant notamment un évaporateur propre à refroidir un flux d'air à envoyer dans l'habitacle.

Selon l'invention, on élabore un signal représentatif de la puissance frigorifique produite par l'évaporateur, à partir d'au moins un capteur de température placé en contact thermique avec l'évaporateur ou en aval de celui-ci dans ledit flux d'air, et on compare le niveau dudit signal à un niveau de référence correspondant à une charge de fluide réfrigérant normale, un niveau inférieur au niveau de référence indiquant une sous-charge.

On peut utiliser, pour élaborer le signal de contrôle, un ou plusieurs capteurs existants, servant notamment au pilotage de la climatisation en fonction des besoins de froid ou à la prévention du givrage de l'évaporateur.

Le procédé selon l'invention peut être mis en oeuvre, soit lors des opérations de maintenance du véhicule, soit lors de l'utilisation de celui-ci, une sous-charge de fluide réfrigérant étant alors signalée au conducteur, par exemple par un voyant placé sur la planche de bord.

Des caractéristiques optionnelles de l'invention, complémentaires ou alternatives, sont énoncées ci-après:
- On utilise pour élaborer ledit signal au moins un capteur de température placé dans une zone de mixage entre l'évaporateur et au moins une ouverture de sortie d'air vers l'habitacle.
- On utilise pour élaborer ledit signal au moins un capteur de température placé au voisinage d'une ouverture de sortie du flux d'air vers l'habitacle.
- On utilise pour élaborer ledit signal au moins un capteur de température placé dans une zone de l'habitacle balayée par ledit flux d'air.
- On mesure la température dudit flux d'air en amont de l'évaporateur et on traite le résultat au moyen d'un modèle du fonctionnement de l'appareil de climatisation pour déterminer ledit niveau de référence.
- On mesure la température de l'évaporateur, ou celle dudit flux d'air au contact de l'évaporateur, au voisinage de l'entrée du fluide réfrigérant dans celui-ci, pour déterminer ledit niveau de référence.
- Lorsque la boucle de climatisation comprend un compresseur du type à débit variable commandé par un signal électrique de commande, procédé dans lequel on calcule ledit niveau de référence à partir dudit signal de commande.
- Le compresseur est du type à cylindrée variable à commande externe, ledit signal de commande étant un courant de commande alimentant une vanne incorporée au compresseur et propre à établir à l'entrée de celui-ci une pression qui est déterminée par ledit courant de commande.
- Le compresseur est entraîné électriquement.
- On élabore ledit signal représentatif lors du fonctionnement du compresseur à un débit suffisant pour assurer, en cas de charge normale, un bon remplissage de l'évaporateur en fluide à l'état liquide.
- Lors dudit fonctionnement du compresseur, le flux d'air sortant de l'évaporateur est réchauffé pour être envoyé dans l'habitacle à la température voulue.
- Ledit niveau de référence correspond à une température inférieure de quelques °C, notamment d'environ 7 °C, à une température variant en fonction linéaire du signal de commande, correspondant au niveau moyen dudit signal représentatif observé en cas de charge normale.

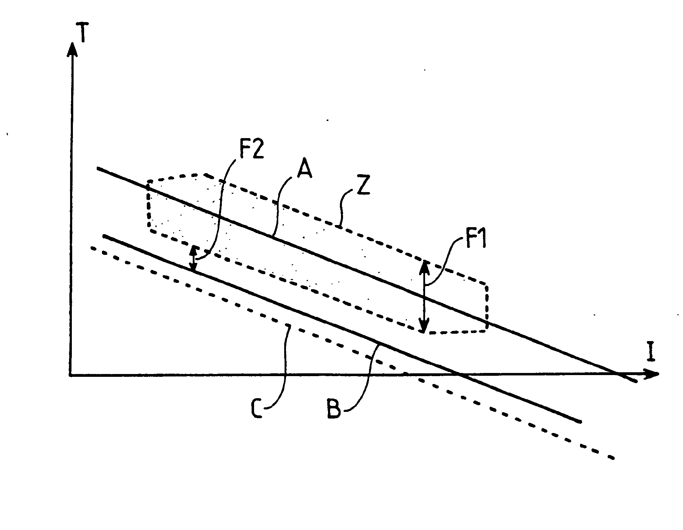

Les caractéristiques et avantages de l'invention seront exposés plus en détail dans la description ci-après, en se référant au dessin annexé.

La figure unique est un graphique montrant la variation de différentes valeurs de températures en fonction du courant d'alimentation de la vanne de commande d'un compresseur à cylindrée variable à commande externe.

Comme indiqué plus haut, en cas de sous-charge de fluide réfrigérant, la puissance frigorifique produite par l'évaporateur est réduite, toutes choses égales par ailleurs. Il en résulte une élévation de température moyenne aussi bien de l'évaporateur lui-même que de l'air en contact avec celui-ci, qui se répercute dans tout le trajet du flux d'air en aval de l'évaporateur, à l'intérieur de l'appareil de climatisation, au niveau des sorties vers l'habitacle et dans l'habitacle lui-même. Un signal représentatif de cette puissance frigorifique peut donc être élaboré aussi bien à partir du signal d'un capteur de température unique que par une combinaison des signaux de plusieurs capteurs de température existants.

La puissance frigorifique, caractérisée par la température de l'air en aval de l'évaporateur, dépend de divers paramètres de fonctionnement de l'appareil de climatisation tels que la pression du fluide en amont du compresseur et le cas échéant la cylindrée du compresseur, et le débit d'air, ainsi que de conditions extérieures telles que température et hygrométrie atmosphériques. Pour déterminer le niveau de référence, on peut donc mesurer la température du flux d'air en amont de l'évaporateur et traiter le résultat au moyen d'un modèle du fonctionnement de l'appareil prenant en compte les paramètres ci-dessus.

Tant qu'il reste un peu de fluide réfrigérant dans la boucle de climatisation, l'évaporateur contient du fluide à l'état liquide au voisinage immédiat de son entrée. La température de l'évaporateur, ou celle du flux d'air, à cet endroit, mesurée par exemple par une sonde de détection de givrage, reste donc sensiblement normale malgré un déficit de fluide, et peut être utilisée pour déterminer le niveau de référence.

L'invention est utilisable notamment en liaison avec une boucle de fluide réfrigérant comprenant un compresseur à cylindrée variable à commande externe.

Un tel compresseur possède une électrovanne, de préférence hacheuse, dont le courant d'alimentation détermine la pression d'entrée du fluide dans le compresseur. Cette pression étant égale, à une perte de charge près, à celle régnant dans l'évaporateur, laquelle détermine la température de fonctionnement de l'évaporateur, on peut ainsi régler avec précision l'efficacité de la boucle de climatisation. Un exemple de compresseur à cylindrée variable à commande externe est décrit dans EP-A-0 353 764.

Dans ce cas, le courant de commande, qui détermine la température normale de fonctionnement de l'évaporateur, peut servir de base pour le calcul du niveau de référence.

Sur la figure, la droite A représente une relation typique entre le courant I d'alimentation de la vanne de commande d'un compresseur à cylindrée variable à commande externe et la température T de la sonde d'évaporateur pour des conditions de climatisation données (débit d'air, température d'air en amont), et pour une charge minimale de la boucle en fluide réfrigérant. En fonction de différents paramètres extérieurs, la température moyenne réelle de l'évaporateur, pour une charge normale de fluide réfrigérant, peut varier par exemple de ± 4 °C par rapport à la température d'équilibre, comme indiqué par la double flèche F1, le point représentatif correspondant se situant dans la zone grisée Z. Tant que la température effectivement constatée se situe dans la zone Z, on ne peut donc pas considérer que la charge de fluide réfrigérant est anormalement basse. On peut adopter une limite de détection correspondant à la droite B, située à une distance de 3 °C (double flèche F2) au-dessous de la zone Z, soit à 7 °C au-dessous de la droite A. La droite en pointillé C, située au-dessous de la droite B, représente un exemple de variation de la température effective en fonction du courant de commande, en cas de sous-charge de fluide réfrigérant.

Lorsque le compresseur à commande externe fonctionne à faible débit en raison d'une faible demande de froid, il est plus difficile de mettre en évidence une sous-charge de fluide réfrigérant dans la boucle. Pour améliorer la détection d'une éventuelle sous-charge dans ces conditions, l'invention prévoit alors de faire fonctionner momentanément le compresseur à débit élevé, pendant le contrôle. Lorsque le contrôle est effectué non pas en atelier, mais pendant l'utilisation du véhicule, il convient alors de réchauffer le flux d'air ayant traversé l'évaporateur, par exemple en le faisant passer de manière connue au contact d'un radiateur de chauffage alimenté par le fluide de refroidissement du moteur d'entraînement du véhicule, pour assurer le confort thermique dans l'habitacle.

## Revendications

1. Procédé pour contrôler la charge de fluide réfrigérant d'une boucle de climatisation de l'habitacle d'un véhicule automobile comprenant notamment un évaporateur propre à refroidir un flux d'air à envoyer dans l'habitacle, **caractérisé en ce qu'**on élabore un signal représentatif de la puissance frigorifique produite par l'évaporateur, à partir d'au moins un capteur de température placé en contact thermique avec l'évaporateur ou en aval de celui-ci dans ledit flux d'air, et on compare le niveau (C) dudit signal à un niveau de référence (B) correspondant à une charge de fluide réfrigérant normale, un niveau inférieur au niveau de référence indiquant une sous-charge.

2. Procédé selon la revendication 1, dans lequel on utilise pour élaborer ledit signal au moins un capteur de température placé dans une zone de mixage entre l'évaporateur et au moins une ouverture de sortie d'air vers l'habitacle.

3. Procédé selon l'une des revendications 1 et 2, dans lequel on utilise pour élaborer ledit signal au moins un capteur de température placé au voisinage d'une ouverture de sortie du flux d'air vers l'habitacle.

4. Procédé selon l'une des revendications précédentes, dans lequel on utilise pour élaborer ledit signal au moins un capteur de température placé dans une zone de l'habitacle balayée par ledit flux d'air.

5. Procédé selon l'une des revendications précédentes, dans lequel on mesure la température dudit flux d'air en amont de l'évaporateur et on traite le résultat au moyen d'un modèle du fonctionnement de l'appareil de climatisation pour déterminer ledit niveau de référence.

6. Procédé selon l'une des revendications 1 à 4, dans lequel on mesure la température de l'évaporateur, ou celle dudit flux d'air au contact de l'évaporateur, au voisinage de l'entrée du fluide réfrigérant dans celui-ci, pour déterminer ledit niveau de référence.

7. Procédé selon l'une des revendications 1 à 4 pour contrôler la charge de fluide réfrigérant d'une boucle de climatisation comprenant un compresseur du type à débit variable commandé par un signal électrique de commande, procédé dans lequel on calcule ledit niveau de référence à partir dudit signal de commande.

8. Procédé selon la revendication 7, dans lequel le compresseur est du type à cylindrée variable à commande externe, ledit signal de commande étant un courant de commande alimentant une vanne incorporée au compresseur et propre à établir à l'entrée de celui-ci une pression qui est déterminée par ledit courant de commande.

9. Procédé selon la revendication 7, dans lequel le compresseur est entraîné électriquement.

10. Procédé selon l'une des revendications 7 à 9, dans lequel on élabore ledit signal représentatif lors du fonctionnement du compresseur à un débit suffisant pour assurer, en cas de charge normale, un bon remplissage de l'évaporateur en fluide à l'état liquide.

11. Procédé selon la revendication 10, dans lequel, lors dudit fonctionnement du compresseur, le flux d'air sortant de l'évaporateur est réchauffé pour être envoyé dans l'habitacle à la température voulue.

12. Procédé selon l'une des revendications 7 à 11, dans lequel ledit niveau de référence correspond à une température inférieure de quelques °C, notamment d'environ 7 °C, à une température variant en fonction linéaire du signal de commande, correspondant au niveau moyen dudit signal représentatif observé en cas de charge normale.

## Claims

1. Method to monitor the refrigerant fluid load of a motor vehicle interior air conditioning circuit particularly comprising an evaporator suitable for cooling an air flow to be sent into the car interior, **characterised in that** a representative signal of the cooling capacity produced by the evaporator is generated, using at least one temperature gauge placed in thermal contact with the evaporator or downstream therefrom in said air flow, and the level (C) of said signal is compared to a reference level (B) corresponding to a normal refrigerant fluid load, a level below the reference level indicating an underload.

2. Method according to claim 1, wherein at least one temperature gauge placed in the mixing zone between the evaporator and at least one air outlet opening to the car interior is used to generate said signal.

3. Method according to any of claims 1 and 2, wherein at least one temperature gauge placed in the vicinity of an air outlet opening to the car interior is used to generate said signal.

4. Method according to any of the above claims, wherein at least one temperature gauge placed in a zone of the car interior swept by said air flow is used to generate said signal.

5. Method according to any of the above claims, wherein the temperature of said air flow is measured upstream from the evaporator and the result is processed by means of an air conditioner operation model to determine said reference level.

6. Method according to any of claims 1 to 4, wherein the temperature of the evaporator, or that of said air flow in contact with the evaporator, in the vicinity of the refrigerant fluid inlet therein, is measured to determine said reference level.

7. Method according to any of claims 1 to 4 to monitor the refrigerant fluid load of an air conditioning circuit comprising a variable flow-type compressor controlled by an electrical control signal, wherein said reference level is calculated using said control signal.

8. Method according to claim 7, wherein the compressor is of the external control variable capacity-type, said control signal being a control current powering a valve incorporated in the compressor and suitable for creating at the inlet thereof a pressure which is determined by said control current.

9. Method according to claim 7, wherein the compressor is driven electrically.

10. Method according to any of claims 7 to 9, wherein said representative, signal is generated during the operation of the compressor at a sufficient flow to ensure, for a normal load, satisfactory filling of the evaporator with liquid fluid.

11. Method according to claim 10, wherein, during said operation of the compressor, the air flow from the evaporator is heated in order to be sent into the car interior at the desired temperature.

12. Method according to any of claims 7 to 11, wherein said reference level corresponds to a temperature a few °C, particularly approximately 7°C, below a temperature varying as a linear function of the control signal, corresponding to the mean level of said representative signal observed for a normal load.

## Patentansprüche

1. Verfahren zum Kontrollieren der Kältemittelbefüllung eines Klimakreislaufs des Fahrgastraums eines Kraftfahrzeugs umfassend insbesondere einen Verdampfer zum Abkühlen eines in den Fahrgastraum zu blasenden Luftstroms, **dadurch gekennzeichnet, dass** ein für die vom Verdampfer produzierte Kälteleistung charakteristisches Signal erstellt wird, ausgehend von zumindest einem Temperaturfühler, der in thermischem Kontakt mit dem Verdampfer angeordnet oder Letzterem im besagten Luftstrom nachgeschaltet ist, und man vergleicht das Niveau (C) des besagten Signals mit einem Referenzniveau (B), das einer normalen Kältemittelbefüllung entspricht, wobei ein Niveau, das niedriger als das Referenzniveau ist, auf eine Unterbefüllung hinweist.

2. Verfahren nach Anspruch 1, wobei zur Erstellung des besagten Signals zumindest ein Temperaturfühler verwendet wird, der in einem Mischbereich zwischen dem Verdampfer und zumindest einer Luftaustrittsöffnung in Richtung Fahrgastraum angeordnet ist.

3. Verfahren nach einem der Ansprüche 1 und 2, wobei zur Erstellung des besagten Signals zumindest ein Temperaturfühler verwendet wird, der in der Nähe einer Luftstromaustrittsöffnung in Richtung Fahrgastraum angeordnet ist.

4. Verfahren nach einem der vorhergehenden Ansprüche, wobei zur Erstellung des besagten Signals zumindest ein Temperaturfühler verwendet wird, der in einem vom besagten Luftstrom durchströmten Bereich des Fahrgastraums angeordnet ist.

5. Verfahren nach einem der vorhergehenden Ansprüche, wobei die Temperatur des besagten Luftstroms vor dem Verdampfer gemessen und das Ergebnis mithilfe eines Funktionsmodells der Klimaanlage verarbeitet wird, um das besagte Referenzniveau zu bestimmen.

6. Verfahren nach einem der Ansprüche 1 bis 4, wobei die Temperatur des Verdampfers oder jene des besagten, mit dem Verdampfer in Kontakt stehenden Luftstroms in der Nähe des Eintritts des Kältemittels in den Verdampfer gemessen wird, um das besagte Referenzniveau zu bestimmen.

7. Verfahren nach einem der Ansprüche 1 bis 4 zum Kontrollieren der Kältemittelbefüllung eines Klimakreislaufs umfassend einen Verdichter der Art variabler Durchsatz, gesteuert durch ein elektrisches Steuersignal; Verfahren, wobei das besagte Referenzniveau ausgehend vom besagten Steuersignal berechnet wird.

8. Verfahren nach Anspruch 7, wobei der Verdichter von der Art mit extern geregeltem und variablem Hubvolumen ist, wobei das besagte Steuersignal ein Steuerstrom ist, der ein Ventil versorgt, das im Verdichter eingebaut und dazu bestimmt ist, am Eintritt des Letzteren einen Druck zu erzeugen, der vom besagten Steuerstrom bestimmt wird.

9. Verfahren nach Anspruch 7, wobei der Verdichter elektrisch angetrieben wird.

10. Verfahren nach einem der Ansprüche 7 bis 9, wobei das besagte charakteristische Signal während des Betriebs des Verdichters bei einem Durchsatz erstellt wird, der ausreichend ist, um bei normaler Befüllung eine gute Füllung des Verdampfers mit flüssigem Mittel sicherzustellen.

11. Verfahren nach Anspruch 10, wobei während des besagten Betriebs des Verdichters der aus dem Verdampfer austretende Luftstrom vorgewärmt wird, um mit der gewünschten Temperatur in den Fahrgastraum geblasen zu werden.

12. Verfahren nach einem der Ansprüche 7 bis 11, wobei das besagte Referenzniveau einer Temperatur entspricht, die um einige °C, insbesondere um ungefähr 7°C, niedriger ist als eine Temperatur, die vom Steuersignal linear abhängig variiert, entsprechend dem durchschnittlichen Niveau des besagten charakteristischen Signals, das bei normaler Befüllung beobachtet wird.
